**Europäisches Patentamt**

**European Patent Office**

**Office européen des brevets**

(19)

(11) Publication number: **0 056 004
B1**

(12)     # EUROPEAN PATENT SPECIFICATION

(45) Date of publication of patent specification: **02.01.86**     (51) Int. Cl.⁴: **C 01 G 49/04,** D 01 F 9/00

(21) Application number: **82300008.8**

(22) Date of filing: **04.01.82**

(54) Production of carbon filaments in the presence of iron monoxide.

(30) Priority: **05.01.81 US 222613
05.01.81 US 222614**

(43) Date of publication of application:
**14.07.82 Bulletin 82/28**

(45) Publication of the grant of the patent:
**02.01.86 Bulletin 86/01**

(84) Designated Contracting States:
**BE DE FR GB NL**

(56) References cited:
**GB-A-1 469 930
US-A-2 391 723
US-A-4 014 980**

**GMELINS HANDBUCH DER ANORGANISCHEN
CHEMIE, EISEN, vol. 8, no. 59, part B, 1932,
Verlag Chemie GmbH, Berlin (DE)**

**CARBON, 1970, vol. 8, pp. 435-442, Pergamon
Press (GB); P.A.TESNER et al.: "Formation of
carbon fibers from acetylene"**

(73) Proprietor: **Exxon Research and Engineering
Company
P.O.Box 390 180 Park Avenue
Florham Park New Jersey 07932 (US)**

(72) Inventor: **Yates, David John Cabena
3096 Valley Road
West Millington New Jersey (US)**
Inventor: **Baker, Rees Terence Keith
200 Gallison Drive
Murray Hill New Jersey (US)**

(74) Representative: **Field, Roger Norton et al
ESSO Engineering (Europe) Ltd. Patents &
Licences Apex Tower High Street
New Malden Surrey KT3 4DJ (GB)**

Courier Press, Leamington Spa, England.

# 0 056 004

**Description**

The present invention relates to the use of FeO in the production of carbon filaments from gaseous hydrocarbons.

There is a growing interest in the use of carbon filaments as fillers and reinforcing agents in polymeric compositions. Various methods have been developed for producing such filaments. For example, U.K. Patent No. 1,469,930, teaches that carbon filaments of less than 10 μm length can be grown by the decomposition of acetylene on a catalyst in the form of metal particles carried by an inert substrate. The particles are deposited on the inert substrate, preferably in the form of a thin film. The substrate is taught to be preferably stainless steel in the form of a gauze, although such materials as graphite may be used.

Although such a method for producing carbon filaments has its merits, there is still need in the art for producing these filaments more abundantly and efficiently.

In accordance with the present invention there is provided a method for using iron monoxide (FeO) in the production of carbon filaments. Preferably, use is made of iron monoxide prepared by a process comprising (a) heating a metallic iron composition containing at least 95 wt.% iron, to a temperature of at least about 540°C; (b) contacting the heated iron composition with steam; wherein the iron composition is substantially free of (aa) protective oxide forming elements and (bb) metal components which are volatile at the temperature employed in step (a) above. The carbon filaments are prepared by dissociating a carbon-containing gas in the presence of FeO at a temperature from the dissociation temperature of the carbon-containing gas to about 800°C; wherein the carbon-containing gas is selected from those that will dissociate at a temperature equal to or less than about 800°C, to produce carbon.

Carbon-containing gases, preferably hydrocarbon gases, which are suitable for use herein, are those gases which are volatile at the reaction temperatures herein and which will dissociate to produce carbon at temperatures less than about 800°C and at pressures from about 0.5 mm to about 760 mm Hg (about 66.6 to about 101324 Pa). Nonlimiting examples of gases suitable for use herein include carbon monoxide, acetylenes, olefins and paraffins. Preferred are those gases that will produce minimum amounts of amorphous carbon while contributing to maximum growth of filamentous carbon. More preferred are the paraffins and most preferred are the $C_2$ to $C_4$ paraffins.

By acetylenes we mean acetylene itself as well as substituted acetylene. It will be understood that the carbon-containing gas suitable for use herein can also be a gas, that is, at temperatures less than about 800°C, will first produce secondary products such as $C_2$ or higher olefins which will subsequently dissociate at those temperatures to give carbon. Furthermore, diluted hydrocarbon streams can be employed if so desired. For example, the hydrocarbon stream can be diluted with an inert gas such as nitrogen or carbon-containing gases such as carbon monoxide and carbon dioxide.

In the practice of the present invention, the carbon-containing gas is brought into contact with iron monoxide which catalyzes the growth of carbon filaments. Although, for purposes of producing carbon filaments, it is not critical how iron monoxide is prepared, the preferred method for producing FeO is to treat an iron composition, preferably comprising at least about 95 wt.% iron with steam at a temperature of at least about 540°C. The iron composition, which more preferably contains at least 98 wt.% iron, most preferably substantially pure iron, should be substantially free of (a) protective oxide forming elements such as silicon, chromium, molybdenum, tantalum, and tungsten, and (b) metal components which are volatile at reaction temperatures herein such as cadmium, zinc and lead.

The iron containing metal composition which can be used herein for the production of iron monoxide can be in any convenient form. Nonlimiting examples of the form in which the iron composition can be employed include tube, sheet, particle, rod, foil, gauze and a fluidized bed of iron particles.

In one preferred embodiment, an iron foil, less than about 0.025 cm thick is converted to iron monoxide in steam at about 700 to 800°C for about three hours. Although three hours are sufficient in the above case, only an effective amount of time would be required to convert the iron composition to iron monoxide. By effective amount of time we mean that minimum amount of time required to convert the iron composition to iron monoxide to a predetermined depth at the reaction conditions employed. The rate of formation of FeO and the time required to achieve this predetermined depth is, of course, dependent on such factors as temperature and metal composition employed and can be determined by routine experimentation by those having ordinary skill in the art and will not be further elaborated herein.

When producing carbon filaments, the flow rate of the carbon-containing gas should be optimized for each gas employed, this can be determined by those having ordinary skill in the art by routine experimentation. Examples of suitable flow rates which can be employed can be found in the examples herein as well as in U.K. Patent No. 1,469,930, which teaches a flow rate of 10 ml/min. to 40 ml/min. for acetylene and diolefins when the carbon filament catalyst is a metal particle such as iron.

The carbon filaments produced in accordance with the present invention can be employed as strengthening or reinforcing agents, selective adsorption agents, or as catalyst support materials such as for hydrogenation catalysts. Furthermore, the carbon filaments as produced herein will generally have a length of about 1 to 10 μm, although lengths of up to 100 μm are possible. Lengths in excess of 100 μm are usually not obtained because they then to become detached from the catalyst surface.

The following examples more fully describe the present invention.

2

Comparative example A

Iron foil coupons (99.99% pure) of 0.013 cm thickness were cleaned, weighed, and placed in a 2.54 cm diameter fused silica reactor tube at room temperature and heated to a temperature of 500°C in flowing (500 cc/min.) nitrogen in a clam shell type electric furnace. Distilled water was then injected in the reactor tube at 0.5 cc/min. and the nitrogen flow rate reduced to 50 cc/min. The nitrogen used during water injection was to prevent undesirable accumulation of water at the exit of the tube. These conditions were maintained for three hours.

Water injection was then cut off and the nitrogen flow rate was increased to 500 cc/min., the furnace was turned off and opened to expose the reactor tube to room temperature, thereby ensuring rapid cooling of the samples.

Upon reaching room temperature the coupons were re-weighed and the results are shown in Table I below.

TABLE I

| Coupon No. | Wt. before treatment (gms) | Wt. after treatment (gms) | Composition of coupon after treatment (mmoles) | |
|---|---|---|---|---|
| | | | Fe | O |
| 1 | 0.20591 | 0.20660 | 3.68 | 0.043 |
| 2 | 0.21939 | 0.21986 | 3.92 | 0.029 |
| 3 | 0.19169 | 0.19191 | 3.42 | 0.014 |
| 4 | 0.19595 | 0.19607 | 3.50 | 0.007 |

Average (normalized) Fe, 1.0;
O, 0.006.

The surface composition of the coupons was obtained by the use of Auger Spectroscopy (e.g., Handbook of Auger Electron Spectroscopy, 2nd. Ed., by L. E. Davis, pub. by Physical Electronics Industries Inc., Eden Prairie, Minn. 1976). The atomic composition is readily obtained by measurement of the peak size from the spectra, as the relative sensitivities of iron and oxygen are known. Small samples of the coupon were inserted into the vacuum chamber of the spectrometer. The sample as inserted into the spectrometer is usually slightly contaminated with carbon from the atmosphere, and in the case of the lower oxides of iron, usually excess oxygen. Hence, in all cases the first significant data is obtained after one minute of Ar ion bombardment; during this time, about 150 Å* of the surface is removed by the ions. The spectrum of coupon 4 (in the table) after 150 Å of the surface had been removed showed a composition of $FeO_{1.30}$. Further bombardment to a final total time of 25 mins. (about 3800 Å) showed a continuous drop-off in oxygen content. The final composition of the layer at a depth of 3800 Å was $FeO_{0.08}$. This corresponds to 92% Fe, and 8% O. There is thus no evidence of any formation of near-stoichiometric FeO in the course of this experiment.

*1 Å=0.1 nm

Example 1

The experimental procedure used in Comparative Example A was followed in all respects, except that the water was passed over the coupons for three hours at 540°C. The weight changes of the iron foils are shown in Table II below.

TABLE II

| Coupon No. | Wt. before treatment (gms) | Wt. after treatment (gms) | Composition of coupon after treatment (mmoles) | |
|---|---|---|---|---|
| | | | Fe | O |
| 1 | 0.19514 | 0.19607 | 3.49 | 0.058 |
| 2 | 0.21172 | 0.21223 | 3.79 | 0.032 |
| 3 | 0.19666 | 0.19721 | 3.52 | 0.034 |
| 4 | 0.18729 | 0.18755 | 3.35 | 0.016 |

Average (normalized) Fe, 1.0;
O, 0.010

The surface composition of Coupon No. 2 was analyzed by Auger Spectroscopy and showed a composition of $FeO_{1.00}$ after bombardment for one minute (150 Å) and a composition of $FeO_{.94}$ after bombardment for 30 minutes (4500 Å). Thus, FeO has been produced to a depth of at least 4500 Å.

Example 2

The experimental procedure used in Comparative Example A was followed in all respects, except that the water was passed over the coupons for three hours at 570°C. The weight changes of the iron foils are shown in Table III below.

TABLE III

| Coupon No. | Wt. before treatment (gms) | Wt. after treatment (gms) | Composition of coupon after treatment (mmoles) | |
|---|---|---|---|---|
| | | | Fe | O |
| 1 | 0.19992 | 0.20062 | 3.58 | 0.044 |
| 2 | 0.19396 | 0.19442 | 3.47 | 0.029 |
| 3 | 0.19271 | 0.19312 | 3.45 | 0.026 |
| 4 | 0.21202 | 0.21258 | 3.80 | 0.035 |

Average (normalized) Fe, 1.0;
O, .009.

The surface composition of Coupon No. 2 was also analyzed by Auger Spectroscopy and showed a composition of $FeO_{.82}$ after bombardment for one minute (150 Å) and a composition of $FeO_{.81}$ after bombardment for 30 minutes (4500 Å). This shows that FeO has been produced to a depth of at least 4500 Å.

Example 3

The experimental procedure used in the above examples was followed except that the water was passed over the coupons for three hours at 600°C. The weight changes of the iron foils are shown in Table IV below.

TABLE IV

| Coupon No. | Wt. before treatment (gms) | Wt. after treatment (gms) | Composition of coupon after treatment (mmoles) | |
| --- | --- | --- | --- | --- |
| | | | Fe | O |
| 1 | 0.19450 | 0.19565 | 3.48 | 0.072 |
| 2 | 0.20210 | 0.20322 | 3.62 | 0.070 |
| 3 | 0.19549 | 0.19659 | 3.50 | 0.069 |
| 4 | 0.18487 | 0.18588 | 3.31 | 0.063 |

Average (normalized) Fe, 1.0;
O, 0.020.

The surface composition of Coupon No. 4 was analyzed by Auger Spectroscopy and showed a composition of $FeO_{1.07}$ after bombardment for 12 minutes (1560 Å) and a composition of $FeO_{.93}$ after bombardment for 27 minutes (3510 Å).

Example 4

The experimental procedure used in the above examples was followed except that the water passed over the coupons for three hours at 700°C. The weight changes of the iron foils are shown in Table V below.

TABLE V

| Coupon No. | Wt. before treatment (gms) | Wt. after treatment (gms) | Composition of coupon after treatment (mmoles) | |
| --- | --- | --- | --- | --- |
| | | | Fe | O |
| 1 | 0.20137 | 0.21077 | 3.61 | 0.59 |
| 2 | 0.20126 | 0.21114 | 3.60 | 0.62 |
| 3 | 0.19522 | 0.20479 | 3.50 | 0.60 |
| 4 | 0.19962 | 0.20947 | 3.57 | 0.62 |

Average (normalized) Fe, 1.0;
O, .170.

The surface composition of Coupon No. 4 was analyzed by Auger Spectroscopy and showed a composition of $FeO_{1.14}$ after bombardment for one minute (138 Å), a composition of $FeO_{.98}$ after bombardment for five minutes (690 Å), and a composition of $FeO_{.906}$ after bombardment for 20 minutes (2800 Å).

Example 5

The experimental procedure used in the above examples was followed except that water was initially introduced at 500°C whereupon the coupons were heated to 800°C and held at that temperature for three hours in the presence of water. The weight changes of the iron foils are shown in Table VI below.

TABLE VI

| Coupon No. | Wt. before treatment (gms) | Wt. after treatment (gms) | Composition of coupon after treatment (mmoles) | |
|---|---|---|---|---|
| | | | Fe | O |
| 1 | 0.20302 | 0.25095 | 3.64 | 3.00 |
| 2 | 0.20987 | 0.26435 | 3.76 | 3.41 |
| 3 | 0.20582 | 0.24935 | 3.69 | 2.72 |
| 4 | 0.20448 | 0.25409 | 3.66 | 3.10 |

Average (normalized) Fe, 1.0;
O, .83.

The surface composition of Coupon No. 4 was analyzed as in the previous examples and showed a composition of $FeO_{.92}$ after bombardment for one minute (156 Å) and a composition of $FeO_{.90}$ after bombardment for 40 minutes (6200 Å). This example shows that the iron foil coupons were almost totally converted to FeO when treated for three hours at 800°C in the presence of water.

Example 6

The experimental procedure used in the above examples was followed except that instead of liquid water being injected into the reactor tube, water vapor was injected by bubbling nitrogen at about 50 cc/min., through a reservoir of water. These conditions were maintained at 800°C for a period of three hours. The weight changes of the iron foil coupons are shown in Table VII below.

TABLE VII

| Coupon No. | Wt. before treatment (gms) | Wt. after treatment (gms) | Composition of coupon after treatment (mmoles) | |
|---|---|---|---|---|
| | | | Fe | O |
| 1 | 0.19844 | 0.20959 | 3.55 | 0.697 |
| 2 | 0.19510 | 0.20333 | 3.49 | 0.514 |
| 3 | 0.20016 | 0.20722 | 3.58 | 0.441 |
| 4 | 0.19195 | 0.19788 | 3.44 | 0.371 |

Average (normalized) Fe, 1.0;
O, .144.

The surface composition of Coupon No. 1 was analyzed as in the previous examples and showed a composition of $FeO_{1.32}$ after bombardment for one minute (130 Å), a composition of $FeO_{.94}$ after bombardment for five minutes (650 Å), and a composition of $FeO_{.91}$ after bombardment for 30 minutes (3900 Å). This example demonstrates that at a temperature of at least 800°C lower concentrations of water in the reactor tube are capable of producing FeO to at least a depth of about 4000 Å.

Example 7

The experimental procedure used in Example 6 above was followed except water vapor was introduced into the reactor at a temperature of 900°C for three hours. The weight changes of the iron foil coupons are shown in Table VIII below.

6

TABLE VIII

| Coupon No. | Wt. before treatment (gms) | Wt. after treatment (gms) | Composition of coupon after treatment (mmoles) | |
| --- | --- | --- | --- | --- |
| | | | Fe | O |
| 1 | 0.19913 | 0.22340 | 3.57 | 1.52 |
| 2 | 0.20872 | 0.22251 | 3.74 | 0.86 |
| 3 | 0.19981 | 0.20844 | 3.58 | 0.54 |
| 4 | 0.18513 | 0.19394 | 3.31 | 0.55 |

Average (normalized) Fe, 1.0;
O, .244.

The surface composition of Coupon No. 1 was analyzed by Auger Spectroscopy and showed a composition of $FeO_{1.21}$ after bombardment for 3.5 minutes (455 Å) a composition of $FeO_{1.06}$ after bombardment for 20 minutes (2600 Å), and a composition of $FeO_{.83}$ after bombardment for 44.5 minutes (5800 Å).

In all the above examples, the coupons were cleaned prior to treatment. The cleaning procedure was accomplished by first immersing them in 190 proof ethyl alcohol, followed by treatment in toluene, followed by treatment in ethyl alcohol again, then boiling distilled water, then ethyl alcohol again, and finally dried in air.

Comparative Example B

Various samples of $Fe_2O_3$ and Fe were used to catalyze the formation of filamentous carbon in an ethane environment. The $Fe_2O_3$ samples of known area were in the form of irregularly shaped wafers which were pressed from a powder having a purity of greater than 99.8% $Fe_2O_3$. The Fe samples were cut from a foil having a purity of 99.99% Fe. The size of each Fe sample was about 3 cm×0.6 cm and had a thickness of 0.013 cm. The Fe samples were cleaned before treatment by first immersing them in 190 proof ethyl alcohol, followed by treatment in toluene, followed by treatment in ethyl alcohol again, then boiling distilled water, then ethyl alcohol again and finally dried in air.

All samples were subjected to the same conditions in ethane. Specifically, they were first placed in a fused silica tube in a three zone furnace at room temperature, and heated to a temperature of 700°C, in flowing nitrogen or argon, whereupon the gas mixture was changed to 1% oxygen in nitrogen which was passed through water at 0°C, then passed over the samples for five minutes. The tube containing the samples was then flushed with nitrogen for five minutes, whereupon ethane was introduced at a rate of 94 cc/min. for a time period from one to six hours, depending on the sample. During this ethane treatment no nitrogen or argon was present.

The weight of deposited carbon was determined by comparing the weight of the sample before and after ethane treatment. It is well known in the art that Fe and $Fe_2O_3$ will form filamentous carbon under the conditions employed therein.

Tables I and II below more specifically set forth the conditions employed during ethane treatment for each sample, as well as showing the amount of carbon formed per $cm^2$ of sample.

**0 056 004**

TABLE 1
Carbon formation from ethane on Fe

| Sample No. | Gas | Reaction time (hr) | Carbon formed | |
|---|---|---|---|---|
| | | | $10^{-4}g/cm^2$ | $10^{-4}g/cm^2/hr$ |
| 1 | $N_2$ | 2 | 303.8 | 151.9 |
| 2 | Ar | 2.5 | 308.4 | 139 |
| 3 | Ar | 2 | 119 | 59.5 |
| 4 | Ar | 2 | 232.2 | 116.1 |
| 5 | Ar | 2 | 152.8 | 76.4 |
| 6 | Ar | 3 | 424.6 | 141.5 |
| 7 | Ar | 3 | 326.4 | 109 |
| 8 | Ar | 1 | 113.2 | 113.2 |
| 9 | $N_2$ | 1 | 148.4 | 148.4 |
| 10 | Ar | 1 | 109.9 | 109.9 |
| 11 | Ar | 1 | 113.3 | 113.3 |
| 12 | Ar | 1 | 148.5 | 148.5 |
| 13 | Ar | 1 | 77.6 | 77.6 |
| 14 | Ar | 1 | 91.8 | 91.8 |
| | | | | Average=114· |

TABLE II
Carbon formation from ethane on $Fe_2O_3$

| Sample No. | Gas | Reaction time (hr) | Carbon formed | |
|---|---|---|---|---|
| | | | $10^{-4}g/cm^2$ | $10^{-4}g/cm^2/hr$ |
| 15 | $N_2$ | 2 | 450 | 225 |
| 16 | $N_2$ | 2 | 535 | 267.5 |
| 17 | $N_2$ | 2 | 348 | 174 |
| 18 | $N_2$ | 2 | 882 | 441 |
| 19* | $N_2$ | 2 | 526 | 263 |
| 20* | $N_2$ | 2 | 666 | 333 |
| 21* | $N_2$ | 2 | 445 | 222.5 |
| 22* | $N_2$ | 2 | 483 | 241.5 |
| | | | | Average=271 |

*These samples did not undergo a 1% oxygen in nitrogen treatment before being treated with ethane.

8

Example 8

Five samples of Fe foil, identical to the foil used in the Comparative Example B, were oxidized at 800°C in water to form FeO. Mössbauer Spectroscopy, Auger Spectroscopy and X-ray diffraction techniques were used to verify that FeO was produced. These FeO samples were then subjected to the same procedure, as described in the above comparative example, for treatment with ethane, except for the variations noted in Table III below.

TABLE III
Carbon formation from ethane on FeO

| Sample No. | Gas | Reaction time (hr) | Carbom formed | |
|---|---|---|---|---|
| | | | $10^{-4}g/cm^2$ | $10^{-4}g/cm^2/hr$ |
| 1 | Ar | 1 | 1086 | 1086 |
| 2 | Ar | 1 | 1869 | 1869 |
| 3 | Ar | 1 | 1129 | 1129 |
| 4 | $N_2$ | 6 | 8214 | 1369 |
| 5 | $N_2$ | 1 | 1461.6 | 1461.6 |
| | | | | Average=1383 |

Small portions of the carbon produced from these FeO substrates were subsequently observed in controlled atmosphere electron microscopy experiments and the carbon was found to be substantially filamentous. A description of controlled atmosphere electron microscopy can be found in Baker, R.T.K., "Carbon Formation on Supported Metal Catalysts", p. 18. in *Gas Chemistry in Nuclear Reactors and Large Industrial Plant,* edited by A. Dyer, Hedon and Son, Ltd., London 1980.

This example, when compared with the above comparative example, illustrates the superior qualities of FeO for catalyzing the formation of filamentous carbon. Furthermore, the reactivity of FeO with respect to filamentous carbon formation is so high that examination of all the FeO samples of this example revealed no trace of the original Fe foil. That is, the entire foil substrate had been completely disintegrated into small particles which were intimately mixed with carbon. Although it had been known that Fe and $Fe_2O_3$ were capable of catalyzing filamentous carbon formation, it had heretofore not been known that such carbon could be formed by of FeO—let alone at such high rates of formation.

Comparative Example C

A sample of Fe foil identical to that used in the above examples was cleaned as previously described and placed in a scanning electron microscope and heated from room temperature (about 20°C) to 750°C in the presence of 0.3 Torr flowing acetylene. The sample was held at 750°C in acetylene until the activity of the Fe for catalyzing the formation of filamentous carbon dropped dramatically. This was determined by continuously analyzing the gaseous effluent from the scanning electron microscope by use of a mass spectrometer. That is, during the formation of filamentous carbon, the acetylene is decomposed and a lower level comes off as effluent, whereas, when the formation of this carbon ceases, the acetylene coming off returns to its original level before reaction began.

Analysis of the effluent revealed that carbon formation commenced at about 650°C and continued for about ten minutes from the time 750°C had been reached. The surface of the substrate was observed before and during treatment.

A section of the treated sample was observed by use of a transmission electron microscope and was found that the carbon formed had been entirely filamentous.

Example 9

A portion of an FeO sample prepared according to the procedure of Example 1 above was placed in a scanning electron microscope under conditions and procedures identical to those described in comparative Example B above. The effluent acetylene level after ten minutes of reaction did not increase nor did it show signs of increasing to its original level after two hours of reaction. This indicated that even after two hours in acetylene the FeO sample was still catalyzing the formation of carbon as opposed to a maximum of ten minutes for Fe. In fact, the reaction was not brought to completion but was terminated at the end of two hours as a matter of convenience.

The surface of the treated substrate was observed and was compared to the surface of the sample of Comparative Example B. It was observed that the density of filamentous carbon on the FeO substrate was at least an order of magnitude greater than that of the Fe substrate of Comparative Example B.

**0 056 004**

The surface of the treated FeO substrate was also observed under a transmission electron microscope wherein it was found that substantially all of the carbon was filamentous.

Comparative Example D

A portion of a $Fe_2O_3$ wafer as prepared according to Comparative Example A above, was placed in a scanning electron microscope under conditions and procedures identical to those previously described. The behavior of this $Fe_2O_3$ substrate with respect to filamentous carbon formation was nearly identical to the Fe substrate of Comparative Example B. That is, after about ten minutes of reaction, the level of effluent acetylene was virtually at its original level. Furthermore, as the powder used in preparation of the $Fe_2O_3$ wafer had a high surface area the reactivity of $Fe_2O_3$ per unit area would be much lower than that of Fe foil. The carbon formed by this $Fe_2O_3$ substrate was also found to be filamentous.

Example 10

A portion of the Fe foil and a portion of a FeO substrate as previously described were run side by side in a scanning electron microscope under the identical conditions and procedures as set forth in the previous few examples. The reaction was run for ten minutes after the substrates reached a temperature of 750°C. The treated substrates were then examined by transmission electron microscopy wherein it was again found that the density of filamentous carbon formed in the FeO substrate was at least an order of magnitude greater than that formed on the Fe substrate.

**Claims**

1. A method for producing carbon filaments comprising dissociating one or more carbon-containing gases in the presence of iron monoxide at a temperature from about the dissociation temperature of the gas to about 800°C.

2. A method according to claim 1 wherein the carbon-containing gas is carbon monoxide, an acetylene, an olefin, a paraffin or a mixture thereof.

3. A method according to claim 2 wherein the carbon-containing gas is one or more $C_2$ to $C_4$ paraffins.

4. A method according to any one of claims 1 to 3 wherein the temperature employed is from about 700°C to about 800°C.

5. A method according to any one of claims 1 to 4 wherein the iron oxide has been produced by:

(a) heating a metallic iron composition, comprising at least about 95 wt.% iron, to a temperature of at least about 540°C; and

(b) contacting the heated iron composition with steam; wherein said iron composition is substantially free of (aa) protective oxide forming elements and (bb) metal components which are volatile at the temperature employed in step (a) above.

**Patentansprüche**

1. Verfahren zur Herstellung von Kohlefäden, dadurch gekennzeichnet, daß ein oder mehrere Kohlenstoff enthaltende Gase in Gegenwart von Eisenmonoxid bei einer Temperatur von etwa der Dissoziationstemperatur des Gases bis etwa 800°C dissoziiert werden.

2. Verfahren nach Anspruch 1, dadurch gekennzeichnet, daß das Kohlenstoff enthaltende Gas Kohlenmonoxid, ein Acetylen, ein Olefin, ein Paraffin oder eine Mischung derselben ist.

3. Verfahren nach Anspruch 2, dadurch gekennzeichnet, daß das Kohlenstoff enthaltende Gas ein oder mehrere $C_2$—$C_4$-Paraffine sind.

4. Verfahren nach einem der Ansprüche 1 bis 3, dadurch gekennzeichnet, daß die verwendete Temperatur etwa 700 bis etwa 800°C beträgt.

5. Verfahren nach einem der Ansprüche 1 bis 4, dadurch gekennzeichnet, daß das Eisenoxid hergestellt worden ist, indem:

(a) eine metallische Eisenzusammensetzung, die mindestens etwa 95 Gew.% Eisen enthält, auf eine Temperatur von mindestens etwa 540°C erhitzt wird und

(b) die erhitzte Eisenzusammensetzung mit Dampf kontaktiert wird, wobei die Eisenzusammensetzung im wesentlichen frei von (aa) Elementen, die schützende Oxide bilden, und (bb) Metallkomponenten ist, die bei der in Stufe (a) angewandten Temperatur flüchtig sind.

**Revendications**

1. Procédé de production de filaments de carbone comprenant la dissociation d'un ou de plusieurs gaz contenant du carbone en présence de monoxyde de fer à une température comprise entre les environs de la température de dissociation du gaz et environ 800°C.

2. Procédé selon la revendication 1, caractérisé en ce que le gaz contenant du carbone est de l'oxyde de carbone, un acétylène, une oléfine, une paraffine ou un mélange de ceux-ci.

3. Procédé selon la revendication 2, caractérisé en ce que le gaz contenant du carbone est constitué d'une ou de plusieurs paraffines en $C_2$ à $C_4$.

10

4. Procédé selon l'une quelconque des revendications 1 à 3, caractérisé en ce que la température employée est comprise entre 700°C environ et 800°C environ.

5. Procédé selon l'une quelconque des revendications 1 à 4, caractérisé en ce que l'oxyde de fer a été produit par:

a) chauffage d'une composition à base de fer métallique, comprenant au moins environ 95% en poids de fer, à une température d'au moins 540°C environ; et

b) mise en contact de la composition à base de fer chauffée avec de la vapeur d'eau, cette composition à base de fer étant pratiquement exempte (aa) d'éléments formant des oxydes protecteurs et (bb) de constituants métalliques volatils à la température employée dans l'étape (a) ci-dessus.